# EUROPEAN PATENT APPLICATION

(11) **EP 0 637 529 A1**
(43) Date of publication of application: **08.02.1995**
(21) Application number: 94112204.6
(22) Date of filing: 04.08.1994
(51) Int. Cl.: B60R 25/04

(54) **Safety device for a vehicle antitheft system**

(30) Priority: 06.08.1993 IT TO930587
(71) Applicant: MAGNETI MARELLI S.p.A., I-20145 Milano (IT)
(72) Inventor: Matteucci, Daniele, I-40100 Bologna (IT); Tegoni, Enrico, I-40137 Bologna (IT)
(74) Representative: Prato, Roberto

(57) **Abstract**

A safety device for vehicle antitheft systems, particularly vehicles featuring an electronic engine control system (2); the device including means for detecting abnormal turn-off of the engine, and means permitting startup of the engine a limited number of times in the event of abnormal turn-off of the engine.

## Description

The present invention relates to a safety device for a vehicle antitheft system, particularly for cars featuring an electronic engine control system.

Systems of the aforementioned type currently installed on motor vehicles are known to comprise an electronic control system for enabling operation of the engine on receiving a user code; an antitheft device for receiving the user code and transmitting it to the control system; and a user code transmitter carried by the user. Failing reception of the correct user code, the control system prevents the engine from being started.

A major drawback of the above system is the impossibility of rapidly starting the engine in the event of a fault in the electrical supply to the control system.

It is an object of the present invention to provide a safety device for a vehicle antitheft system, enabling rapid startup of the engine even in the event of abnormal turn-off of the engine due to a fault in the electrical supply to the control system.

Further aims and advantages of the present invention will be disclosed in the following description.

According to the present invention, there is provided a safety device for a vehicle antitheft system, particularly for vehicles featuring an electronic engine control system; characterized in that it comprises means for detecting abnormal turn-off of the engine; and means permitting startup of the engine a limited number of times in the event of abnormal turn-off of the engine.

A preferred, non-limiting embodiment of the present invention will be described by way of example with reference to the accompanying drawings, in which:
Figure 1 shows a block diagram of an antitheft system in accordance with the teachings of the present invention;
Figure 2 shows an operational flow chart of the Figure 1 system.

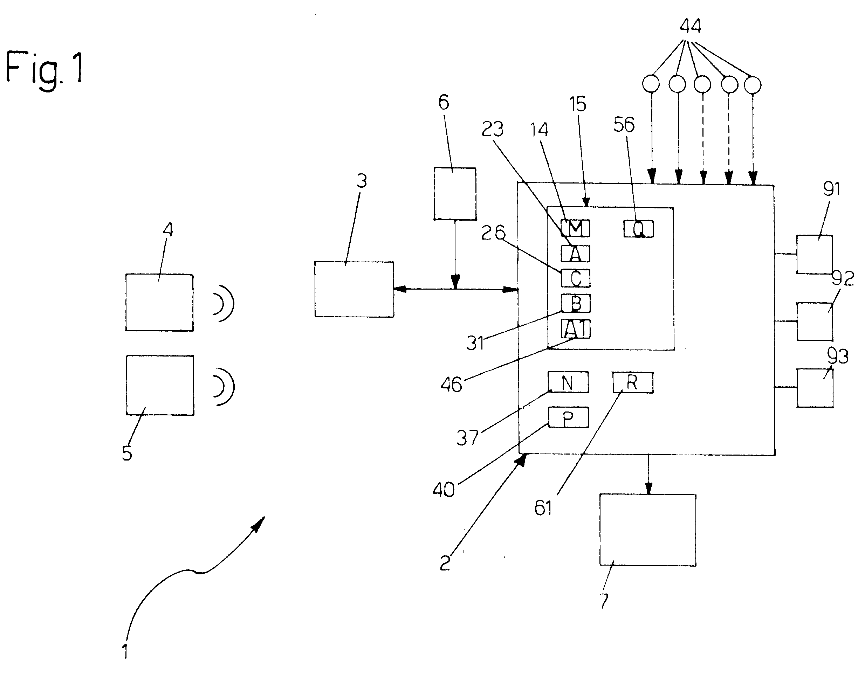

Number 1 in Figure 1 indicates a vehicle antitheft system, particularly for motor vehicles.

System 1 comprises:
an electronic control system 2 for enabling operation of the engine on receiving a user code "A", a fitter code "B", or a maker code "C";
an on-vehicle antitheft device 3 presenting a signal receiver connected to control system 2;
a code "A" transmitter 4 for the user;
a code "B" transmitter 5 for the fitter of system 1 to the vehicle;
a device 6 for the maker of control system 2, and connectable to control system 2 for transmitting code "C"; and
a display 7 connected to control system 2 and fitted to the vehicle dashpanel.

Transmitters 4 and 5 may consist of electromagnetic wave generators or electronic keys; and control system 2 is a self-deactivating type.

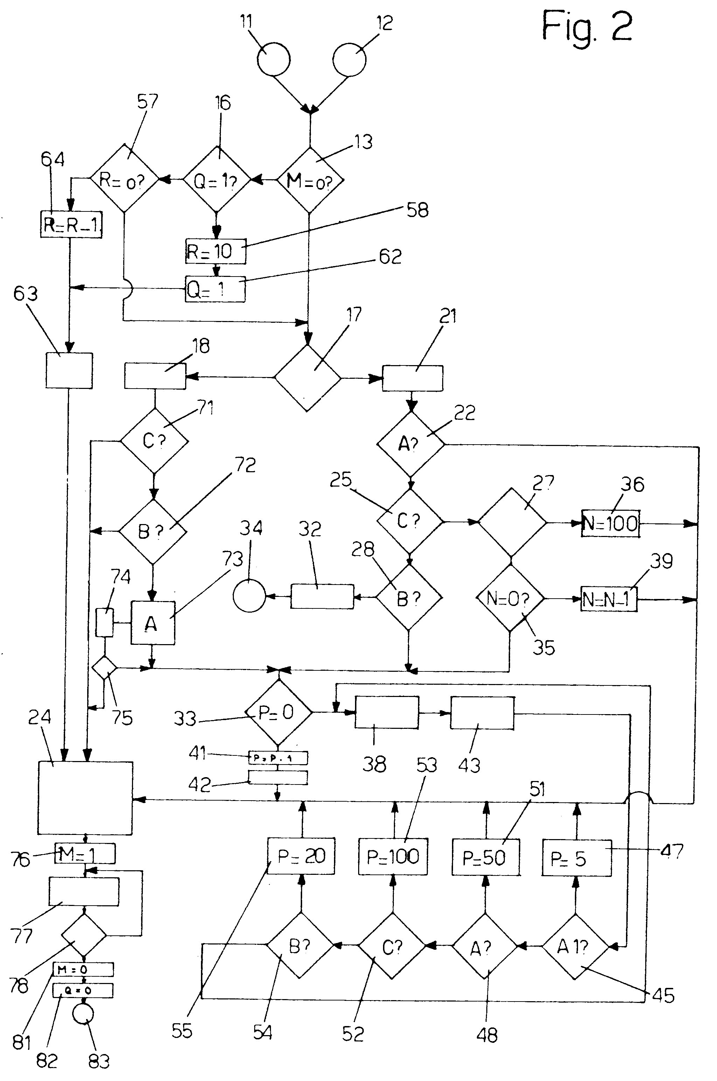

With reference to Figure 2, the operational flow chart.of system 1 comprises two start blocks 11 and 12, the first relative to electrical connection of control system 2, e.g. by means of the ignition key, and the second of which is the output block of a procedure, within control system 2, for initializing system 2 following an internal error. Blocks 11 and 12 go on to block 13 which determines whether a quantity "M" in cell 14 of memory 15 of control system 2 (Figure 1) presents a "0" or "1" value. If "M" equals "1", block 13 goes on to block 16; conversely, block 13 goes on to block 17.

Block 17 determines whether code "A" has ever been "seen", i.e. whether control system 2 is newly installed, or has already performed an engine startup enabling procedure based on recognition of code "A". If control system 2 is newly installed, block 17 goes on to block 18; conversely, block 17 goes on to block 21. In block 21, control system 2 requests two-time transmission of a code by the electric blocks connected to it. The code may be "A" or "B", in which case it is transmitted to control system 2 by device 3, or "C", in which case it is transmitted by device 6. Upon control system 2 receiving two identical codes within a predetermined time, block 21 goes on to block 22 which determines whether the code received is the user code "A" stored in cell 23 of memory 15. In the event of a positive response, block 22 goes on to block 24. Conversely, block 22 goes on to block 25 which determines whether the code received is the maker code "C" stored in cell 26 of memory 15.

In the event of a positive response, block 25 goes on to block 27. Conversely, block 25 goes on to block 28 which determines whether the code received is the fitter code "B" stored in cell 31 of memory 15. In the event of a positive response, block 28 goes on to block 32; conversely, block 28 goes on to block 33. Block 32 provides for activating an engine startup lock procedure within control system 2, which procedure may only be exited, as shown schematically by block 34, by removing the ignition key. Block 32 also provides for a character display on display 7, indicating the engine lock condition defined in block 32 by the above procedure. Block 27 determines whether code "C" has ever been "seen", i.e. whether control system 2 is at the maker's disposal for setup or maintenance purposes. In the event control system 2 has already performed an engine enabling procedure based on recognition of code "C", block 27 goes on to block 35; conversely, block 27 goes on to block 36.

Block 36 commands a reference quantity "N" in counter 37 of control system 2 to assume a discrete value of, say, "100", and then goes on to block 24; and block 35 determines whether reference quantity "N" presents a "0" value. In the event of a positive response, block 35 goes on to block 33. Conversely, block 35 goes on to block 39 which decreases the value of quantity "N" by one unit, and then goes on to block 24.

Block 33 determines whether a reference quantity "P", the value of which is stored in counter 40 of control system 2, presents a "0" value. In the event of a positive response, block 33 goes on to block 38. Conversely, block 33 goes on to block 41 which decreases the present value of quantity "P" by one unit, and then goes on to block 42 and from there to block 24. Block 42 provides, on display 7, for a character display indicating counter 40, and for a user indication of the value of quantity "P". Block 38 provides for activating an engine startup lock procedure, within control system 2, which procedure may only be exited, as shown schematically by block 43, by the user twice performing a series of events which control system 2 identifies as corresponding to code "A", part "A1" of code "A", code "B" or code "C". Such events may be a combination of a number of operations of the brake pedal, a number of turn-on operations of electrical components such as the headlights, etc., which are detected by control system 2 by means of a number of sensors 44 (Figure 1) and converted internally into an operating code. Block 38 also provides for a character display on display 7, indicating the engine lock condition defined in block 38 by the above procedure. Part "A1" of user code "A" is a code which the owner of the vehicle may reveal to anyone borrowing the vehicle, so that operation of the engine may be enabled (a limited number of times) by the borrower in the event of a fault on antitheft device 3.

Block 43 goes on to block 45 which determines whether the operating code matches part "A1" of user code "A" stored in cell 46 of memory 15. In the event of a positive response, block 45 goes on to block 47; conversely, block 45 goes on to block 48. Block 47 commands reference quantity "P" in counter 40 of control system 2 to assume a discrete value of, say, "5", and then goes on to block 24.

Block 48 determines whether the operating code matches user code "A". In the event of a positive response, block 48 goes on to block 51; conversely, block 48 goes on to block 52. Block 51 commands reference quantity "P" in counter 40 of control system 2 to assume a discrete value of, say, "50", and then goes on to block 24.

Block 52 determines whether the operating code matches maker code "C". In the event of a positive response, block 52 goes on to block 53; conversely, block 52 goes on to block 54. Block 53 commands reference quantity "P" in counter 40 of control system 2 to assume a discrete value of, say, "100", and then goes on to block 24.

Block 54 determines whether the operating code matches fitter code "B". If it does, and code "A" has not yet been memorized, block 54 goes on to block 55; conversely, block 54 goes back to block 38. Block 55 commands reference quantity "P" in counter 40 of control system 2 to assume a discrete value of, say, "20", and then goes on to block 24.

Block 16 determines whether a quantity "Q" in cell 56 of memory 15 of control system 2 (Figure 1) presents a "0" or "1" value. If "Q" equals "1", block 16 goes on to block 57. Conversely, if "Q" equals "0", block 16 goes on to block 58 which commands a reference quantity "R" in counter 61 of control system 2 to assume a discrete value of, say, "10". Block 58 then goes on to block 62 which commands quantity "Q" in cell 56 to assume a "1" value, and provides for a character display on display 7 indicating (as described in more detail later on) startup of the engine following anomalous disconnection of control system 2, i.e. other than by withdrawal of the ignition key. Block 62 then goes on to block 63 and from there to block 24. Block 63 provides, on display 7, for a character display indicating counter 61, and for a user indication of the value of quantity "R".

Block 57 determines whether reference quantity "R" presents a "0" value, and, in the event of a positive response, goes on to block 17. Conversely, block 57 goes on to block 64 which decreases the value of quantity "R" by one unit and then goes on to block 63.

In block 18, control system 2 requests two-time transmission of a code by the electric blocks connected to it. The code may be "A" or "B", in which case it is transmitted to control system 2 by device 3, or "C", in which.case it is transmitted by device 6.- Upon control system 2 receiving two identical codes within a predetermined time, block 18 goes on to block 71 which determines whether the code received is the fitter code "B" already memorized. In the event of a positive response, block 71 goes on to block 24. Conversely, block 71 goes on to block 72 which determines whether the code received is the maker code "C" already memorized. In the event of a positive response, block 72 goes on to block 24. Conversely, block 72 goes on to block 73 in which the received code is assumed as user code "A", and which then goes on to block 74 which provides for storing user code "A" in cell 23 and part "A1" of code "A" in cell 46. Block 74 then goes on to block 75 which determines correct or incorrect storage of user code "A" and part "A1" of code "A". In the case of correct storage, block 75 goes on to block 24; conversely, block 75 goes on to block 33.

In block 24, control system 2 activates its internal blocks preparatory to starting the vehicle engine, and also provides for a character display on display 7 indicating the engine startup enabling condition. Block 24 then goes on to block 76 which commands quantity "M" to assume a "1" value, and then goes on to engine control procedure block 77. During operation of the engine, and every predetermined number of engine cycles, block 77 goes on to block 78 which controls' the position of the ignition key. If the key is withdrawn or set by the user to the off position, block 78 goes on to block 81. Conversely, if the key is set by the user to the on position, block 78 goes back to block 77 which continues controlling the engine. Block 81 commands quantity "M" to assume a "0" value, and then goes on to block 82 which in turn commands quantity "Q" to assume a "0" value and then goes on to block 83 in which control system 2 determines the most appropriate time to deactivate automatically.

Blocks 32 and 38 provide for taking the necessary steps for preventing startup of the engine, such as (Figure 1) disabling fuel pump control member 91, and disabling control of electronic fuel injection system 92 and electronic ignition system 93. Block 24 presents a procedure for determining whether the received code is code "B", in which case, a procedure for limiting output of the engine is activated in block 77; and an internal procedure for preventing startup by code "B" when quantity "P" exceeds the discrete value established in block 55.

In actual use, the owner of the vehicle is provided with transmitter 4 and informed of the series of events to be performed on the vehicle for defining the combination of events corresponding to code "A" and to part "A1" of code "A", so that the engine may be started a limited number of times by the owner in the event of a fault on device 3. If the vehicle is loaned, the owner may disclose only part "A1" of code "A" to enable the borrower, in the event of a fault on device 3, to start the engine a limited number of times, less than the number permitted using code "A".

The fitter of system 1, on the other hand, is provided with transmitter 5 and informed of the series of events to be performed on the vehicle for defining the combination of events corresponding to code "B", so that the engine may be started, albeit at reduced power, by the fitter. This feature is particularly useful for vehicle manufacturers in that it enables system 1 to be installed at the end of the production line and the vehicle to be transferred to the parking lot and loaded on to the carrier for transfer to the dealer. As shown clearly in the operational flow chart of system 1, code "B" cannot be used to start the engine once code "A" has been memorized.

In actual use, the maker of control system 2 defines a code "C" for each system 2, is provided with a device 6 for transmitting it to system 2, and knows the series of events to be performed on the vehicle for defining the combination of events corresponding to code "C", thus enabling the maker to produce, safely test, and carry out any maintenance or repair work on system 1.

In the event the engine is turned off, not by withdrawing the ignition key, but by interrupting the engine control procedure in block 77, system 1 presents a safety device (blocks 13, 16, 57, 58, 62, 64, 76, 78, 81, 82) permitting startup of the engine with no code request being made. In other words, quantity "M" indicates the manner in which control system 2 is deactivated when the engine is turned off. To prevent a code being requested for initializing control system 2 when the engine is turned off abnormally, startup of the engine is permitted when quantity "M" assumes a "1" value. By means of quantity "Q" and when "M" = "1", the safety device permits the engine to be started up a limited number of times, to prevent control system 2 from being deactivated voluntarily by turning off the engine abnormally, and to prevent control system 2 from being connected to the electric supply circuit by tampering with the electric connections. Moreover, the information supplied to display 7 is memorized for providing an operating log of system 1.

The advantages of the present invention are as follows.

In particular, it permits startup of the engine a limited number of times even in the event the engine is turned off abnormally, and provides for enabling startup of the engine by four users, each with a respective code. The owner of the vehicle is permitted to start the engine any number of times using transmitter 4, and a limited number of times by means of a combination of events representing code "A". Anyone borrowing or hiring the vehicle is permitted to start the engine a limited number of times by means of a combination- of events representing part "A1" of code "A". The fitter of system 1 is permitted to start the engine a limited number of times ("P" = "20") using transmitter 5, if code "A" has not yet been memorized; to start the engine a limited number of times by means of a combination of events representing code "B", if code "A" has not yet been memorized; and also to start the engine at reduced power. If code "A" has already been memorized, the maker of control system 2 is permitted to start the engine a limited number of times by means of both device 6 and a combination of events representing code "C".

Clearly, therefore, system 1 only permits startup of the engine by means of transmitter 4 or a startup code. And even in the event confidential code "B" or "C" should become known, these only permit startup of the engine a limited number of times, which is a strong deterrent against theft of the vehicle. Finally, all the information relative to engine turn-off, specific operating conditions of system 1, and the limited number of engine startups by means of a combination of events or following abnormal turn-off of the engine, are shown on display 7 and memorized in control system 2.

Clearly, changes may be made to the safety device and antitheft system as described and illustrated herein without, however, departing from the scope of the present invention.

For example, light signals may be used for indicating turn-off of the engine and specific operating conditions of system 1.

## Claims

**1)** A safety device for a vehicle antitheft system, particularly for vehicles featuring an electronic engine control system (2); characterized in that it comprises means for detecting abnormal turn-off of the engine; and means permitting startup of the engine a limited number of times in the event of abnormal turn-off of the engine.

**2)** A device as claimed in Claim 1, characterized in that it comprises means for displaying, on a display (7) , the number of times startup of the- engine is permitted in the event of abnormal turn-off of the engine.

**3)** A vehicle antitheft system, particularly for vehicles featuring an electronic engine control system (2), comprising:
a first block (23) in which a first code (A) is stored;
a first transmitter (4) for the vehicle owner, for generating a signal representing said first code (A);
a receiver (3) connected to and for supplying incoming signals to said control system (2);
means for comparing the signal received by said receiver (3) with said first code (A);
means for enabling startup of the engine when the signal received by said receiver (3) matches said first code (A); and
means for disabling startup of the engine when the signal received by said receiver (3) fails to match said first code (A);
characterized in that it comprises a number of sensors (44) for detecting a series of events effected by the user on internal parts of the vehicle; means for converting said series of events into an operating code; means for comparing said operating code with said first code (A); means for enabling startup of the engine when said operating code matches said first code (A); means for disabling startup of the engine when said operating code fails to match said first code (A); and means for limiting the number of times startup of the engine may be enabled by said operating code matching said first code (A).

**4)** A system as claimed in Claim 3, characterized in that it comprises means for displaying, on a display (7), the number of times startup of the engine may be enabled by said operating code matching said first code (A).

**5)** A system as claimed in Claim 3 and/or 4, characterized in that it comprises:
a second block (46) in which part (A1) of said first code (A) is stored;
means for comparing said operating code with said part (A1) of said first code (A);
means for enabling startup of the engine when said operating code matches said part (A1) of said first code (A);
means for disabling startup of the engine when said operating code fails to match said part (A1) of said first code (A); and
means for limiting the number of times startup of the engine may be enabled by said operating code matching said part (A1) of said first code (A).

**6)** A system as claimed in Claim 5, characterized in that it comprises means for displaying, on a display (7), the number of times startup of the engine may be enabled by said operating code matching said part (A1) of said first code (A).

**7)** A system as claimed in at least one of the foregoing Claims from 3 to 6, characterized in that it comprises:
a third block (31) in which a second code (B) is stored;
a second transmitter (5) for the fitter of said system to the vehicle, for generating a signal representing said second code (B);
means for comparing the signal received by said receiver (3) with said second code (B);
means for enabling startup of the engine a limited number of times when the signal received by said receiver (3) matches said second code (B), and providing said first code (A) has not yet been memorized in said first block (23); and
means for disabling startup of the engine when the signal received by said receiver (3) fails to match said second code (B).

**8)** A system as claimed in Claim 7, characterized in that it comprises means for low-power control of the engine, when the signal received by said receiver (3) matches said second code (B), and providing said first code (A) has not yet been memorized in said first block (23).

**9)** A system as claimed in Claim 7, characterized in that it comprises means for comparing said operating code with said second code (B); means for enabling startup of the engine when said operating- code matches said second code (B) and said first code (A) has not yet been memorized; means for disabling startup of the engine when said operating code fails to match said second code (B); and means for limiting the number of times startup of the engine may be enabled by said operating code matching said second code (B).

**10)** A system as claimed in Claim 9, characterized in that it comprises means for low-power control of the engine when said operating code matches said second code (B).

**11)** A system as claimed in Claim 10, characterized in that it comprises means for displaying, on a display (7), the number of times startup of the engine may be enabled by said operating code matching said second code (B).

**12)** A system as claimed in at least one of the foregoing Claims from 3 to 11, characterized in that it comprises:
a fourth block (26) in which a third code (C) is stored;
a device (6) for the maker of said control system (2), for generating a signal representing said third code (C);
means for comparing the signal supplied by said device (6) with said third code (C);
means for enabling startup of the engine a limited number of times when the signal supplied by said device (6) matches said third code (C); and
means for disabling startup of the engine when the signal supplied by said device (6) fails to match said third code (C).

**13)** A system as claimed in Claim 12, characterized in that it comprises means for comparing said operating code with said third code (C); means for enabling startup of the engine when said operating code matches said third code (C); means for disabling startup of the engine when said operating code fails to match said third code (C); and means for limiting the number of times startup of the engine may be enabled by said operating code matching said third code (C).

**14)** A system as claimed in Claim 13, characterized in that it comprises means for displaying, on a display (7), the number of times startup of the engine may be enabled by said operating code matching said third code (C).

**15)** A system as claimed in the foregoing Claims, characterized in that it comprises means for indicating information relative to engine startup enabling and disabling conditions; and means for storing all the displayed information.
